# EUROPEAN PATENT APPLICATION

(11) **EP 4 216 584 A1**
(43) Date of publication of application: **26.07.2023**
(21) Application number: 22152501.7
(22) Date of filing: 20.01.2022
(51) Int. Cl.: H04W 4/90, H04W 4/06, H04W 4/12

(54) **PUBLIC WARNING SYSTEM AND METHOD OF BROADCASTING CONTENT**

(71) Applicant: Rohde & Schwarz GmbH & Co. KG, 81671 München (DE)
(72) Inventor: Oestreicher, Lars, 81671 München (DE)
(74) Representative: Prinz & Partner mbB

(57) **Abstract**

A public warning system for broadcasting content comprises a 5G-based or LTE-based broadcast infrastructure (18) configured to broadcast content to all users in a coverage area of the broadcast infrastructure (18). The public warning system (10) comprises a content provider entity (14) configured to provide content. The public warning system (10) comprises a broadcast core entity (16) that is configured to process the content provided by the content provider entity (14). The public warning system (10) comprises a management entity (22) configured to assign the content to at least one user service, thereby generating a message to be broadcasted. The public warning system (10) comprises an operator interface (24) via which access to the management entity (22) is enabled to adapt the message. Further, a method of broadcasting content is described.

## Description

The invention relates to a public warning system for broadcasting content. Further, the invention relates to a method of broadcasting content by means of a public warning system.

In the state of the art, public warning systems are known that are used to warn the public concerning a certain danger, for instance natural disasters like earthquakes, floods, thunderstorms, firestorms and similar.

In general, public warning systems should alert and inform all citizens that are threatened by the danger with the purpose of enabling them to prepare and to act in a timely manner to reduce the impact of the danger. This implies that the systems applied for public warning must alert the people, but also provide them sufficient information in an understandable manner. The effectiveness of public warning systems to achieve this goal is highly dependent on the communication channels used, as different communication systems have uneven capabilities to fulfill all public warning requirements and diversity is required to reach the maximum of people at risk. Those public warning systems are also called civilian warning systems, as they are used to warn the civilization appropriately with respect to an upcoming danger.

The public warning systems known typically comprise alarm sirens for civil protection, namely electronic sirens. The respective sirens output a characteristic audio signal to warn the civilization concerning the future danger. Despite the sirens, it is also known that the public warning systems comprise warning lights, e.g. in addition to the sirens, which output an optical signal for warning the civilization concerning the upcoming danger.

However, it has turned out that the public becomes only aware of a certain danger due to the activation of the respective sirens and/or warning lights, but the people do not know what particular kind of danger is to be expected. Therefore, it is not clear to the people how to react correctly with regard to the upcoming danger. Hence, the known public warning systems do not effectively lead to proper reactions of the people. Therefore, the warnings are not effective as the people do not know how to properly react, which is also caused by the nescience about the kind of future danger.

In order to overcome this issue, it is also known to use regular internet services that require software applications to be installed on smartphones or similar devices such that the subscribers of the respective internet services may obtain further information via the applications on their smartphones. However, these regular internet services require internet access of the respective smartphones, which may not be guaranteed in case of a catastrophic situation, e.g. due to a blackout affecting the regular mobile network infrastructure used for the regular internet services.

Therefore, there is a need for an efficient and fail-safe public warning system that ensures appropriate warning of the civilization in case of danger.

The invention provides a public warning system for broadcasting content, wherein the public warning system comprises a 5G-based or LTE-based broadcast infrastructure configured to broadcast content to all users in a coverage area of the broadcast infrastructure. The public warning system comprises a content provider entity configured to provide content. The public warning system further comprises a broadcast core entity that is configured to process the content provided by the content provider entity. The public warning system comprises a management entity configured to assign the content to at least one user service, thereby generating a message to be broadcasted. The public warning system comprises an operator interface via which access to the management entity is enabled to adapt the message.

The invention also provides a method of broadcasting content by means of a public warning system, wherein the method comprises the steps of:
- Providing, by means of a content provider entity, content,
- Processing, by means of a broadcast core entity, the content provided by the content provider entity, and
- Assigning, by means of a management entity, the content provided by the content provider entity to at least one user service, thereby generating a message to be broadcasted, wherein the message is adaptable via an operator interface granting access to the management entity.

The main idea of the invention is to control the content made available via the message broadcasted, as the respective content is assigned to the message broadcasted by means of the management entity. In fact, the respective combining may be done by at least one session ID, e.g. link session ID. The link session ID may be part of a link included into the message by means of the broadcast core entity that processes the content provided by the content provider entity in order to generate the message to be broadcasted.

In fact, the public warning system may comprise several content provider entities that may provide different content that shall be made available to the user in the coverage area by means of broadcasting services. The management entity may authorize the respective content provider entities to broadcast the additional content in relation to the session ID. Accordingly, the broadcast core entity is enabled to pass the content to the session with the respective (link) session ID. In other words, the management entity coordinates which content is broadcasted on which session, e.g. the information of the respective content.

Generally, the message to be broadcasted may comprise a link to the respective content. Particularly, the link provided in the message directs a user to a web page. The respective content may be provided by the at least one content provider entity, wherein the users receiving the link by means of the message can use the link for receiving further information, namely the content. Since the link is broadcasted, the respective link corresponds to a broadcast link. Hence, the broadcast link sent will be received by all users in the coverage area. The link may be made by a uniform resource locator (URL) scheme that is compact and short.

The content may relate to video content, audio content, and/or data content, particularly a behavioral recommendation and/or a live video. The message may comprise a link to the respective video, audio and/or data such that the user is enabled to receive the respective information appropriately. The user may read the text of the message broadcasted while being enabled to click on the link for receiving the content, e.g. via the same broadcast channel, namely the same frequency band. Hence, no additional (mobile) network or uplink channel is required for receiving the content.

The content (if activated, e.g. by clicking the link) is also broadcasted via the broadcast infrastructure rather than via a mobile network used for regular internet services.

For instance, the video may be started when clicking on the link, the audio may be played when clicking on the link or rather a data file may be downloaded when clicking on the link. The respective content may be broadcasted via the same broadcast channel used for broadcasting the messages. Further, a web browser on the respective end device may be opened in order to retrieve the additional content via the web browser.

Generally, the user service may relate to a temporary mobile group identifier (TMGI) such that the management entity may authorize different content provider entities to broadcast different content.

The users may correspond to mobile users that are located in the coverage area of the broadcasting infrastructure irrespective thereof if the users are subscribers to a certain (internet) service or not. Hence, all available users in the coverage area are informed automatically due to the cell broadcasting provided by the public warning system, as the messages are broadcasted to multiple users, e.g. mobile telephone users, in the coverage area at the same time.

The messages broadcasted may relate to short messages of a short message service (SMS). Put differently, the public warning system comprises a cell broadcast (CB) service, which is also known as Short Message Service-Cell Broadcast (SMS-CB) or Cell Broadcast Short Message Service (CB SMS).

Generally, the (cell) broadcasting differs to typical short message services in that (cell) broadcasting concerns a one-to-many geo-targeted and geo-fenced messaging service rather than a point-to-point messaging service. This is achieved by directing the messages to be broadcasted to radio cells (transmitters) rather than to a user entity, e.g. a user end device like a mobile, a smartphone, a tablet or similar.

In other words, the public warning system comprises a cell broadcast system (CBS) that is generally enabled to broadcast the respective messages to all users located in the coverage area of the broadcasting infrastructure by using several cells, e.g. up to 1 million cells in less than 10 seconds, thereby reaching millions of users.

According to another example, the broadcasting infrastructure may have a cost-effectively single High-Power High Tower (HPHT) transmitter may be used that covers a metropolitan region with millions of users.

Generally, the broadcasting infrastructure may comprise at least one redundant transmitter as fallback option in case of failure of the intended transmitter.

Accordingly, the civilization can be warned by means of text messages that use the cell broadcast system (CBS) based on a cost-effective and reliable manner LTE-based or rather 5G-based broadcast infrastructure that comprises respective transmitters, namely LTE- or 5G-based transmitters.

In general, the public warning system may be fail-safe in order to ensure that the public warning system is still active in case of a blackout. Actually, the 5G-based or LTE-based broadcast infrastructure of the public warning system corresponds to an additional infrastructure with respect to a regular network infrastructure used for regular internet services. The regular network infrastructure might be partially or even completely down due to the respective circumstances that come together with the danger, for instance bad weather or other catastrophic conditions like flood and/or thunderstorms.

In other words, the broadcast infrastructure for transmitting the respective messages is still working even though a parallel mobile network infrastructure for regular internet services has broken down. Obviously, the broadcast infrastructure of the public warning system may also be operated in parallel with the regular network infrastructure used for the regular services. In any case, the broadcast infrastructure of the mobile network ensures that content is broadcasted to all users in the coverage area in contrast to services of a regular mobile network infrastructure that is limited to the respective subscribers of the service.

In general, a 5G-based or LTE-based network may be provided that comprises the 5G-based or LTE-based broadcast infrastructure (broadcast network) for broadcasting the messages as well as the regular mobile network infrastructure used for regular internet services.

Contrary to the regular network infrastructure, the broadcast infrastructure relates to a unidirectional transmission, as the messages are only broadcasted without receiving any feedback via an uplink channel or similar.

An aspect provides that the management entity is configured to assign the content to the at least one user service at a given point in time, and wherein the assignment is adaptable at any time. Hence, the management entity is generally enabled to switch the content provided in the messages broadcasted from one source to another source, namely among the different content provider entities. Therefore, updated information may be provided by adapting the respective assignment. In addition, further information may be broadcasted, as different content is broadcasted, e.g. in a subsequent manner.

Another aspect provides that the operator interface is configured to only grant access to an authority or an authorized entity. Since adaptions of the messages to be broadcasted can be done by means of the operator interface, the operator interface only grants access to an authority or an authorized entity. Thus, it is avoided that unauthorized users are enabled to adapt the messages. In other words, network authorization is required to use the operator interface for having access to the management entity via which adaptions of the processing done by the broadcast core entity can be done, e.g. the respective assignment. For instance, the operator interface may be a REpresentational State Transfer Application Programming Interface (REST API) such as xMB-C / xMB-U, which requires network authorization.

According to a further aspect, the operator interface is configured to provide access to the broadcast core entity via the management entity. Accordingly, the messages to be broadcasted can be adapted accordingly, as the management entity controls the assignment of the content to the user service, e.g. the respective sessions, particularly based on the session ID.

Furthermore, the management entity is configured to adapt the assignment of the content to the at least one user service depending on a condition, particularly depending on a geographical area affected. The respective assignment can be adapted manually via the operator interface or rather automatically based on data associated with geographical information. Changing circumstances caused by the future danger may cause the respective adaption of the assignment, e.g. new developments or rather other information shall be broadcasted which can be ensured by adapting the respective content provider, the content of which is assigned to the respective user service. Moreover, the area affected may vary over time such that this may have an influence on the respective content assigned to the user service.

Hence, the management entity may be configured to adapt the assignment of the content to the at least one user service such that the message is broadcasted to a smaller geographic area or a wider geographic area. In case, the danger increases to a larger area, more users have to be warned accordingly. Therefore, the assignment may be altered such that more user in a larger geographic area are warned. However, the danger may also narrow, particularly with respect to the area affected, such that a smaller number of users have to be warned which can also be achieved by altering the assignment of the content to the user service(s).

Another aspect provides that the broadcast core entity is configured to enrich the content provided by the content provider with data associated with geographical information of a geographical area affected. Thus, data not directly accessible by the user may be broadcasted as well. The respective data associated with the geographical information may be used for warning only users that are located in a certain sub-area of the respective area affected. Hence, unnecessary warnings of users can be avoided that are not directly endangered.

The data associated with geographical information may be used for addressing purposes which takes place in a higher layer of the broadcasting with respect to the message sent.

Moreover, the radio stations, namely the evolved NodeB (eNBs), receiving the messages to be broadcasted may be selected based on the data associated with geographical information. Thus, the coverage area of the broadcast infrastructure may be altered.

The public warning system may comprise at least one user entity that is configured to receive the message. The user entity may relate to a user end device, for instance a smartphone, a mobile, a tablet and/or a television. The user entity may provide access to the content broadcasted.

Particularly, the user entity is configured to receive and to process the message broadcasted, wherein the user entity is configured to only process the message in case the geolocation of the user entity matches with the geographical information. This ensures that no unnecessary warnings are outputted such that the users will not get used to (unnecessary) warnings. Accordingly, the effectiveness of the public warning system is guaranteed.

During the warning, the messages may be broadcasted to a smaller geographic area or a wider geographic area in order to react on changing circumstances associated with the danger.

An additional aspect provides that the public warning system comprises a cell broadcast entity configured to provide a warning text message to be broadcasted by means of the broadcast infrastructure. The warning text message corresponds to regular text messages used to warn the civilization. As mentioned above, the respective broadcast infrastructure uses the cell broadcast system (CBS) to reach a large number of users in the affected area. The respective users do not only receive the warning text message provided by the cell broadcast entity, but also at least information concerning the content that may be provided by the content provider entity. Hence, further information about the respective emergency situation can be provided so as to warn the civilization more effectively rather than only the text provided by the cell broadcast entity.

Further, the content provided by the content provider may correspond to additional content that is provided by means of the content provider in addition to the warning text message provided by means of the cell broadcast entity. As mentioned above, the additional content may relate to video content, audio content, and/or data content, particularly a behavioral recommendation and/or a live video.

According to a further aspect, the broadcast core entity is configured to process and combine the warning text message with information of the additional content provided by the content provider entity, thereby generating an enriched warning text message. Thus, a warning text message to be broadcasted is provided by means of a cell broadcast entity, wherein the warning text message is combined with the content provided by the content provider entity by means of a broadcast core entity, thereby generating an enriched warning text message. Hence, the respective text of a regular warning text message is enhanced with information concerning the additional content, thereby providing additional information such that all users in the respective coverage area of the broadcasting area are enabled to obtain further valuable information. The additional content may be used to provide instructions to the users or rather further information what specific danger is upcoming.

The enriched warning text message may comprise a link to the respective video, audio and/or data such that the user is enabled to receive the respective information appropriately. The user may read the text of the message broadcasted while being enabled to click on the link for receiving the additional content, e.g. via the same broadcast channel, namely the same frequency band. Hence, no additional (mobile) network or uplink channel is required for receiving the additional content.

Generally, the respective warning text messages, particularly the enriched warning text messages, may be broadcasted repetitively such that new users entering the coverage area of the broadcast infrastructure will automatically receive the respective information, namely the enriched warning text messages.

Furthermore, the respective content submitted by means of the (enriched) warning text messages can be updated on a regular basis, particularly the respective links and/or the content provided by the respective links. As mentioned above, the management entity is enabled to adapt/update the respective assignment.

The link encompassed in the enriched warning text message can be adapted in order to ensure that the users directly recognize that the respective additional content may have been changed due to a different link submitted. The users will be motivated to click the updated link.

Hence, the link included into the text of the text warning messages may be used like a wildcard, which might be modified over time.

In fact, the warning text messages and the additional content, namely the enriched warning text messages, are broadcasted by the same radio station, particularly evolved NodeB (eNB), such that no additional mobile network or upload/uplink channel is required.

Accordingly, a single, particularly high power, transmitter can be used in order to reach an undetermined number of user in the respective coverage area so as to forward the enriched warning text messages in order to warn the civilization.

Further, the content provider entity may be associated with a television station, a broadcasting company, civil protection, a fire department and/or a police department. Hence, an alerting authority, also called originator, may generate the content to provide this content for being broadcasted to all users in the coverage area of the broadcasting infrastructure. Of course, other (warning) authorities may also provide the respective content in addition to the text of the warning text messages that is provided by the cell broadcast entity (CBE).

Generally, multiple warning text messages, e.g. the respective texts of these messages, as well as different content of several content provider entities can be provided which are processed by the broadcast core entity (BCE). For instance, the text may be provided in multiple languages. The text of a certain language may be combined by means of the broadcast core entity with a dedicated content.

The respective content may be broadcasted in one or more broadcast session(s) that is/are set up before sending the warning text messages. The broadcast core entity combines the warning text messages with the content provided, thereby generating the enriched warning text messages that are broadcasted by means of the broadcast infrastructure.

Hence, the additional content can be stopped independently from the warning text messages. The respective stop may be initiated by the content provider entity and/or the broadcast core entity, for instance before stopping broadcasting the warning text messages, with stopping broadcasting the warning text messages, and/or after stopping broadcasting the warning text messages.

In general, the public warning system may comprise several cell broadcast entities (CBEs) that are connected with the broadcast core entity (BCE), wherein the several cell broadcast entities may provide different warning text messages, e.g. the same text in different languages and/or different texts. The broadcast core entity is enabled to process the different warning text messages received, particularly simultaneously.

As already mentioned above, the public warning system may comprise several content provider entities that are connected with the broadcast core entity, wherein the several content provider entities provide different content. The broadcast core entity is enabled to process the different warning text messages received, particularly simultaneously.

For instance, the broadcast core entity may comprise several cell broadcast cores (CBCs), wherein each of the several cell broadcast cores is configured to generate a dedicated enriched warning text message to be broadcasted by combining a warning text message with a respective additional content. Accordingly, the broadcast core entity is enabled to provide several enriched warning text messages simultaneously, particularly wherein the number of different enriched warning text messages is equal to the number of cell broadcast cores included in the broadcast core entity.

The operator of the content provider entity and the operator of the cell broadcast entity may be different or even the same.

Generally, the additional content may also be directly broadcasted rather than broadcasting the link.

Moreover, the broadcast infrastructure may comprise at least one transmitter with an emergency power supply, which is configured to transmit the enriched warning text message. The respective transmitter may be located on a specific site in order to ensure to reach as many people as possible in case of an emergency. Furthermore, the transmitter is independent of the power grid so that the enriched warning messages can still be broadcasted even though the power grid failed, for instance due to a blackout. For instance, the broadcast infrastructure comprises at least one radio station that is located on an exposed position, e.g. on top of a hill. Further, the respective radio station may be powered by means of an emergency power supply such that the messages can still be broadcasted by the broadcast infrastructure even if the regular network infrastructure would not work anymore.

In general, the message generated by means of the broadcast core entity is forwarded to the 5G-based or LTE-based broadcast infrastructure such that the broadcast infrastructure is enabled to broadcast the respective message to all users in the coverage area of the broadcast infrastructure.

Generally, the term "entity" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

It is to be understood that an entity may be established by a single electronic device or even by a portion of a single electronic device. However, an entity may also be established by a plurality of electronic devices that are interconnected, e.g. a network of electronic devices.

Further aspects and many of the attendant advantages of the claimed subject matter will become more readily appreciated, as the same become better understood by reference to the following detailed description, when taken in conjunction with the accompanying drawings.

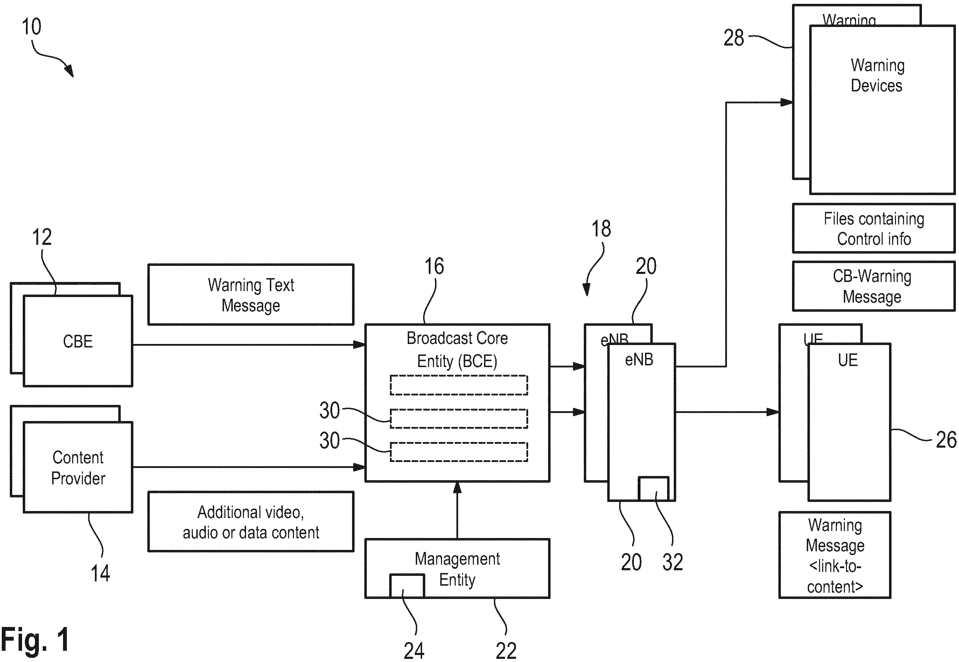

In the drawings, Figure 1 schematically shows an overview of a public warning system according to a preferred embodiment of the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

In Figure 1, a public warning system 10 is shown that is also called cell broadcast system (CBS) or civilization warning system.

The public warning system 10 comprises at least one cell broadcast entity (CBE) 12 that provides a warning text message to be broadcasted in order to warn the civilization with respect to a danger like a natural disaster, particularly a geological disaster, a hydrological disaster, a meteorological disaster or similar.

In the shown embodiment, the public warning system 10 also comprises at least one content provider entity 14 that provides content to be broadcasted, for instance additional content like video content, audio content and/or data content.

The public warning system 10 also comprises a broadcast core entity 16 that is connected with the cell broadcast entity 12 and the content provider entity 14 in a signal transmitting manner such that the broadcast core entity 16 is configured to communicate with the cell broadcast entity 12 and the content provider entity 14, thereby receiving or at least accessing the warning text message and the additional content.

In addition, the public warning system 10 comprises a broadcast infrastructure 18 that corresponds to a 5G-based broadcast infrastructure or an LTE-based broadcast infrastructure, e.g. a broadcast infrastructure using telecommunication standards according to the fourth and fifth generation.

In the shown embodiment, the respective broadcast infrastructure 18 comprises two transmitters 20 that are established as radio (base) stations, e.g. evolved NodeBs (eNBs).

Accordingly, the broadcast infrastructure 18 is configured to broadcast content to all users in a coverage area of the broadcast infrastructure 18 irrespective thereof if the respective users are subscribers to a certain (internet) service or not.

Generally, the broadcast core entity 16 is configured to generate a message to be broadcasted by means of the broadcast infrastructure 18.

For instance, the broadcast core entity 16 is enabled to combine information about the additional content, particularly the additional content itself, to the warning text message provided by the cell broadcast entity 12, thereby generating the message to be broadcasted which corresponds to an enriched warning text message.

The respective combining may be done by at least one session ID, e.g. link session ID.

The link session ID may be part of a link included into the warning text message by means of the broadcast core entity 16. The respective link added to the warning text message corresponds the information of the additional content.

The respective broadcasting of the content can generally start before, at (simultaneously) or after the warning text message has been broadcasted.

In the shown embodiment, the public warning system 10 further comprises a management entity 22 that is associated with the broadcast core entity 16.

The management entity 22 is generally enabled to manage the processing done by the broadcast core entity 16 when handling the respective information obtained from the cell broadcast entity 12 and the content provider entity 14. Thus, the management entity 22 is enabled to control the broadcast core entity 16, e.g. to do settings of the broadcast core entity 16.

For instance, the management entity 22 assigns the content to at least one user service, thereby generating the message to be broadcasted by means of the broadcast infrastructure 18. The respective assignment is done at a given point in time. However, the assignment is adaptable at any time by means of the management entity 22.

Hence, the message generated by the broadcast core entity 16 can be adapted by means of the management entity 22 accordingly.

The management entity 22 may authorize the respective content provider entities 14 to broadcast the additional content in relation to the session ID.

As mentioned above, the public warning system 10 may comprise several authorized content provider entities 14 that may provide different content, e.g. video content, audio content, and/or data content, particularly a behavioral recommendation and/or a live video. Hence, the respective content provider entities 14 may relate to a television station, a broadcasting company, civil protection, a fire department and/or a police department.

Accordingly, the broadcast core entity 16 is enabled to pass the respective additional content to the respective session having a dedicated link session ID, particularly based on the setting done by means of the management entity 22.

In other words, the management entity 22 coordinates which content is broadcasted on which session. Hence, the management entity 22 is generally enabled to switch the content provided in the messages broadcasted from one source to another source, namely among the different content provider entities 14.

The public warning system 10 also comprises an operator interface 24 via which access to the management entity 22 is enabled. Hence, the processing of the broadcast core entity 16 can be adapted via the operator interface 24.

Generally, the access to the management entity 22 provided by the operator interface 24 may also provide access to the broadcast core entity 16 or even the cell broadcast entity 12.

The cell broadcast entity 12, the broadcast core entity 16, and/or the management entity 22 may relate to the same authority or different authorities, for instance civil protection, a fire department and/or a police department.

In the shown embodiment, the operator interface 24 is provided by the management entity 22 itself. Even though the operator interface 24 is shown as being part of the management entity 22, the operator interface 24 may generally be provided in a separate manner.

Since adaptions of the messages to be broadcasted can be done by means of the operator interface 24, the operator interface 24 only grants access to an authority or an authorized entity. Thus, it is avoided that unauthorized users are enabled to adapt the messages.

In other words, network authorization is required to use the operator interface 24 for having access to the management entity 24 via which adaptions of the processing done by the broadcast core entity 16 can be done.

For instance, the operator interface 24 may be a Representational State Transfer Application Programming Interface (REST API) such as xMB-C / xMB-U, which requires network authorization.

Moreover, the public warning system 10 according to the embodiment shown in Figure 1 comprises user entities 26 as well as warning devices 28.

The user entities 26 may be established by smartphones, mobile phones, tablets and/or televisions.

In contrast thereto, the warning devices 28 are typically allowed to be operated by (national) authorities or authorized entities like company authorities provided that the warning devices 28 are located at company premises. Hence, the warning devices 28 may relate to enterprise resource management entities or rather building management entities.

The respective broadcast infrastructure 18 is generally configured to broadcast the respective messages received from the broadcast core entity 16 to the user entities 26 and the warning devices 28 which in turn are enabled to receive the messages and process them accordingly, thereby outputting information.

As mentioned above, the respective messages to be broadcasted by means of the broadcast infrastructure 18 are generated by the broadcast core entity 16 that is configured to process the different information obtained from the different entities connected thereto, e.g. the warning text messages received via the cell broadcast entities 12, the content received via the different content provider entities 14 and/or information/data received from the management entity 22.

According to a first example, the broadcast core entity 16 is enabled to receive and process the warning text message provided by the at least one cell broadcast entity 12 and the additional content provided by the at least one content provider entity 14 so as to generate the at least one enriched warning text message to be broadcasted.

Generally, several warning text messages and several additional contents may be processed simultaneously by the broadcast core entity 16, thereby generating several enriched warning text messages simultaneously. Particularly, these several enriched warning text messages are broadcasted by means of different cells, e.g. different parts of the broadcasting infrastructure 18.

For this purpose, the broadcast core entity 16 may comprise several cell broadcast cores 30 as indicated in Figure 1.

The enriched warning text message(s) generated may comprise the text of the warning text message, which is enriched by the broadcasting link to the respective content.

Further, the broadcast core entity 16 is configured to forward the enriched warning text message(s) generated to the broadcast infrastructure 18 such that the broadcast infrastructure 18 is enabled to broadcast the enriched warning text message(s) to the user entities 26.

The user entities 26 are enabled to receive the enriched warning text messages, wherein the text of the warning text message may be displayed on the user entities 26. In addition, the link to the additional content may be displayed so that a user of the respective user entities 26 is enabled to click on the link in order to obtain the additional content, e.g. video content, audio content and/or data content.

For instance, the user may be directed to a web page on its user entity 26 when clicking on the respective link that is comprised in the text of the enriched warning text message processed by the user entity 26.

Generally, the additional content may encompass live information like a live video or behavioral recommendations so that the user is informed how to react probably due to the respective circumstances of the future danger.

In addition, the broadcast core entity 16 may include data associated with geographical information of a geographical area affected into the enriched warning text message to be broadcasted when generating the respective message.

The additional information included may not be directly visible to the user of the user entities 26, but it is encompassed in the respective enriched warning text message such that the user entities 26 have access to the corresponding data when processing the enriched warning text message received.

The user entities 26 may process the enriched warning text messages received, wherein the user entities 26 only display the text of the respective warning text messages and the link or rather the additional content directly in case the geolocation of the user entity 26 matches with the geographical information that has been included by means of the broadcast core entity 16 previously.

Accordingly, a geo-targeted and geo-fenced messaging is enabled by the broadcasting service of the public warning system 10.

Therefore, it is ensured that only a certain subset of all users in the respective coverage area of the broadcast infrastructure 18 is warned actively in case these users are effectively exposed to the critical situation. Superfluous warnings of users not endangered can be avoided effectively such that those users do not get used to unnecessary warnings.

Further, the public warning system 10 ensures that the text of the warning text message can be adapted appropriately such that updated information concerning the respective circumstances can be broadcasted. Therefore, the operator interface 24 may be used such that an authority or an authorized entity is enabled to adapt the text of the respective warning text message to be displayed on the user entities 26.

The respective transmitters 20 may comprise an emergency power supply 32 which ensures that the transmitters 20 are still operable even though a power grid has broken down, which affects the regular network infrastructure used for regular internet services.

Furthermore, the entire broadcast infrastructure 18 may be an additional one to the regular network infrastructure. This ensures that the messages to be broadcasted can be still broadcasted even though the remaining mobile network has broken down.

The broadcast core entity 16 ensures that the content provided by the different content provider entities 18, which shall be broadcasted to the users, is assigned to at least one user service, thereby generating the message to be broadcasted by the broadcast infrastructure 18.

The user service may relate to a temporary mobile group identifier (TMGI) such that the management entity 22 authorize different content provider entities 14 to broadcast the additional content.

The broadcast core entity 16 receives the different additional content from the several content provider entities 14, wherein the broadcast core entity 16 is enabled to pass the respective additional content to the respective session with the associated session ID. The management entity 22 therefore coordinates which additional content is broadcasted on which session. Thus, it is possible to switch between the respective contents of the different content provider entities 14.

In general, the operator interface 24 allows to adapt the respective assignment of the data to be broadcasted to the at least one user session based on the ID as mentioned above. Therefore, the respective additional content to be broadcasted with the warning text message can be adapted by means of the management entity 22.

In general, the management entity 22 assigns the content to be broadcasted to the at least one user service at a given point in time, wherein the respective assignment can be adapted at any time via the operator interface 24.

The assignment of the data to be broadcasted to the at least one user service may depend on a respective condition, for instance a geographical area affected. The respective assignment can be adapted manually via the operator interface 24 or rather automatically based on data associated with geographical information.

For instance, the management entity 22 is enabled to adapt the assignment of the content to the at least one user service such that the message is broadcasted to a smaller geographic area or a wider geographic area. This means that the data associated with the geographic information concerning the geographical area affected is altered accordingly.

As mentioned above, the user entities 26 that receive the enriched waring text messages will output the respective information only in case their geolocation matches with the geographic information submitted by means of the enriched warning text messages in order to avoid false warnings.

Furthermore, the broadcast core entity 16 is also configured to generate a message to be broadcasted by means of the broadcasting infrastructure 18 to the warning devices 28.

For this purpose, the broadcast core entity 16 receives data from the management entity 22 to be included into the message to be broadcasted.

In fact, the management entity 22 assigns at least one device control command for controlling the warning devices 28 to the message to be broadcasted via at least one user service, e.g. a specific warning device service. Thus, the broadcast core entity 16 enriches the message to be broadcasted with data associated with the at least one device control command. The respective data may be encrypted, thereby ensuring data security.

The respective user service has a dedicated service class identifying itself as the warning device service so that the respective warning devices 28 receive the information concerning the service class.

All warning devices 28 in the coverage area of the broadcast infrastructure 18 receive the respective user service by means of a 5G-based or LTE-based broadcast receiver associated with the respective warning devices 28.

An optional middleware or application software running on the warning devices 28 detects the respective data contained in the enriched message broadcasted, which comprises the at least one device control command, namely the control information about their respective behavior. In case the data is encrypted, the warning devices 28 are also enabled to decrypt the encrypted data so as to access the content of the data, namely the at least one device control command.

The respective message broadcasted may be associated with the warning device service that contains a file download session with at least one encrypted file so that the warning devices 28 receiving the respective messages broadcasted start a file download in order to receive the encrypted data. The encrypted data is decrypted by means of the warning devices 28 themselves in order to obtain the device control command and process the device control command respectively.

In addition, the warning devices 28 may be configured to be waked up by the message received in oder to enter an active operational state in which the respective data of the message are decrypted accordingly for being processed further. Thus, the broadcast infrastructure 18 is enabled to wake up the different warning devices 28 in its coverage area accordingly.

Alternatively or additionally, the warning devices 28 may also be waked up by means of the (enriched) warning text messages broadcasted by the broadcast infrastructure 18, namely the CB-warning messages as indicated in Figure 1.

Once the warning devices 28 have been waked up, the warning devices 28 are enabled to receive and process the messages associated with the file download session so as to download and decrypt the data containing the at least one device control command.

Furthermore, the broadcast core entity 16 may enrich the message to be broadcasted with data associated with geographical information of a geographical area affected. The respective warning devices 28 may receive and process the message broadcasted, wherein the warning devices 28 only process the message in case the geolocation of the warning device 28 matches with the geographical information.

The operator interface 24 may grant access to the management entity 22 so as to adapt the respective assignment of the device control command for controlling the respective warning devices 28 to the message to be broadcasted. The operator interface 24 may only grant access to an authority or an authorized entity.

Further, the message broadcasted may comprise at least one unique ID of a dedicated warning device 28 such that only the dedicated warning device 28 is addressed in the coverage area of the broadcast infrastructure 18. Thus, it is ensured that only a certain number, particularly defined warning devices 28, are controlled in the respective manner in order to warn only a certain critical infrastructure, for instance a certain sub-area of the entire coverage area of the broadcast infrastructure 18.

The management entity 22 is enabled to adapt the assignment of the device control command to the message to be broadcasted such that the message is broadcasted to a smaller geographic area or wider geographic area, thereby adapting the number of warning devices 28 to be controlled accordingly. Again, this ensures that superfluous or unnecessary warnings are omitted effectively.

Generally, an effective and informative public warning system 10 is provided that ensures that the civilization is warned and informed appropriately concerning any upcoming dangers.

Certain embodiments disclosed herein, particularly the respective entities, utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A public warning system for broadcasting content, wherein the public warning system (10) comprises a 5G-based or LTE-based broadcast infrastructure (18) configured to broadcast content to all users in a coverage area of the broadcast infrastructure (18), wherein the public warning system (10) comprises a content provider entity (14) configured to provide content, wherein the public warning system (10) comprises a broadcast core entity (16) that is configured to process the content provided by the content provider entity (14), wherein the public warning system (10) comprises a management entity (22) configured to assign the content to at least one user service, thereby generating a message to be broadcasted, and wherein the public warning system (10) comprises an operator interface (24) via which access to the management entity (22) is enabled to adapt the message.

2. The public warning system according to claim 1, wherein the management entity (22) is configured to assign the content to the at least one user service at a given point in time, and wherein the assignment is adaptable at any time.

3. The public warning system according to claim 1 or 2, wherein the operator interface (24) is configured to only grant access to an authority or an authorized entity.

4. The public warning system according to any of the preceding claims, wherein the operator interface (24) is configured to provide access to the broadcast core entity (17) via the management entity (22).

5. The public warning system according to any of the preceding claims, wherein the management entity (22) is configured to adapt the assignment of the content to the at least one user service depending on a condition, particularly depending on a geographical area affected.

6. The public warning system according to any of the preceding claims, wherein the management entity (22) is configured to adapt the assignment of the content to the at least one user service such that the message is broadcasted to a smaller geographic area or a wider geographic area.

7. The public warning system according to any of the preceding claims, wherein the broadcast core entity (16) is configured to enrich the content provided by the content provider entity (14) with data associated with geographical information of a geographical area affected.

8. The public warning system according to any of the preceding claims, wherein the public warning system (10) comprises at least one user entity (26) that is configured to receive the message.

9. The public warning system according to claims 7 and 8, wherein the user entity (26) is configured to receive and to process the message broadcasted, and wherein the user entity (26) is configured to only process the message in case the geolocation of the user entity (26) matches with the geographical information.

10. The public warning system according to any of the preceding claims, wherein the public warning system (10) comprises a cell broadcast entity (12) configured to provide a warning text message to be broadcasted by means of the broadcast infrastructure (18).

11. The public warning system according to claim 10, wherein the content provided by the content provider entity (14) corresponds to additional content that is provided by means of the content provider entity (14) in addition to the warning text message provided by means of the cell broadcast entity (12).

12. The public warning system according to claim 10 or 11, wherein the broadcast core entity (16) is configured to process and combine the warning text message with information of the additional content provided by the content provider entity (14), thereby generating an enriched warning text message.

13. A method of broadcasting content by means of a public warning system, wherein the method comprises the steps of:
- Providing, by means of a content provider entity (14), content,
- Processing, by means of a broadcast core entity (16), the content provided by the content provider entity (14), and
- Assigning, by means of a management entity (22), the content provided by the content provider entity (14) to at least one user service, thereby generating a message to be broadcasted, wherein the message is adaptable via an operator interface (24) granting access to the management entity (22).

14. The method according to claim 13, wherein a warning text message to be broadcasted is provided by means of a cell broadcast entity (12), and wherein the warning text message is combined with the content provided by the content provider entity (14) by means of the broadcast core entity (16), thereby generating an enriched warning text message, in particular wherein the content corresponds to additional content that is provided in addition to the warning text message provided.

15. The method according to claim 13 or 14, wherein the message to be broadcasted comprises a link to the content.
